Europäisches Patentamt

European Patent Office

Office européen des brevets

(19)

(11) Veröffentlichungsnummer: **0 395 986**
**A2**

(12) **EUROPÄISCHE PATENTANMELDUNG**

(21) Anmeldenummer: **90107709.9**

(22) Anmeldetag: **24.04.90**

(51) Int. Cl.5: **G02B 5/26, G02F 1/19**

(30) Priorität: **29.04.89 DE 3914377**

(43) Veröffentlichungstag der Anmeldung:
**07.11.90 Patentblatt 90/45**

(84) Benannte Vertragsstaaten:
**AT BE CH DE DK ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Hickel, Werner, Dr.**
**Valentin-Streuber-Strasse 66**
**D-6800 Mannheim 24(DE)**
Erfinder: **Knoll, Wolfgang, Dr.**
**Elsa-Brandstroem-Strasse 18d**
**D-6500 Mainz(DE)**

(54) **Verfahren zur optischen Filterung von polarisiertem Licht.**

(57) Die Erfindung betrifft ein Verfahren zur optischen Filterung von polarisiertem Licht, wobei das zu filternde polarisierte Licht auf ein Schichtsystem trifft, in dem Oberflächenplasmonen oder Lichtleitermoden angeregt werden.

EP 0 395 986 A2

## Verfahren zur optischen Filterung von polarisiertem Licht

Die Erfindung betrifft ein Verfahren zur optischen Filterung von polarisiertem Licht.

Optische Filter, die bestimmte Wellenlängenbereiche des Lichts ausblenden, werden vor allem im Hinblick auf Anwendungen im Bereich der integrierten Optik immer wichtiger.

Zur Erzeugung von optischen Filtern sind mehrere Verfahren bekannt. Die wichtigsten sind Interferenzfilter oder Monochromatoren. Das Interferenzfilter kann entweder als Kantenfilter oder Bandpaßfilter ausgelegt werden. Ein Monochromator wird hauptsächlich als Bandpaßfilter hoher Güte verwendet.

Der vorliegenden Erfindung liegt die Aufgabe zugrunde, ein Verfahren aufzuzeigen, das es ermöglicht, mit geringem verfahrenstechnischem Aufwand polarisiertes Licht derart optisch zu filtern, daß ein bestimmter Wellenlängenbereich des eingestrahlten Lichts ausgeblendet wird.

Erfindungsgemäß gelingt es überraschenderweise, ein inverses optisches Bandpaßfilter, also eine Bandsperre zu erzeugen, das über einen weiten Wellenlängenbereich durchstimmbar ist, und dessen Güte durch Materialparameter beeinflußt werden kann.

Gegenstand der vorliegenden Erfindung ist ein Verfahren zur optischen Filterung von polarisiertem Licht, das dadurch gekennzeichnet ist, daß das zu filternde polarisierte Licht auf ein Schichtsystem trifft, in dem Oberflächenplasmonen oder Lichtleitermoden angeregt werden.

Oberflächenplasmonen werden vorzugsweise an einer Metall- oder Halbleiter/Dielektrikum-Grenzfläche angeregt, Lichtleitermoden dagegen in einem transparenten Medium. Zur Anregung von Oberflächenplasmonen oder Lichtleitermoden wird vorzugsweise eine Kopplungsanordnung verwendet. Als Kopplungsanordnung wird vorzugsweise ein Prisma verwendet, wobei die Basisfläche des Prismas mit einer Metall- oder Halbleiterschicht mit einer Metall- oder Halbleiterschicht und zusätzlich einer transparenten Deckschicht beschichtet ist. Für das erfindungsgemäße Verfahren kann jedoch auch eine Metall- oder Halbleiterschicht und/oder eine transparente Schicht mit einem Abstand von 100 bis 400 nm zur Basisfläche des Prismas angebracht sein. Als Kopplungsanordnung kann vorteilhafterweise auch eine Gitterstruktur auf einer Festkörperoberfläche verwendet werden, auf die eine Metall- oder Halbleiterschicht und/oder eine transparente Schicht aufgebracht ist.

Oberflächenplasmonen sind gebundene, strahlungslose elektromagnetische Wellen, die durch Polarisationsladungen auftreten, die sich entlang einer Metall/Dielektrikum-Grenzfläche ausbreiten (vgl. E. Burstein, W.P. Chen, Y.J. Chen and A. Hartstein, J. Vac. Sci. Technol. 11, 1004 (1974)). Ihre Feldstärke weist an der Metalloberfläche ein Maximum auf und fällt exponentiell vertikal zur Grenzfläche sowohl in das Metall als auch in das Dielektrikum hinein ab (vgl. H. Raether, in: Physics of Thin Films (eds. G. Hass, M.H. Francombe and R.W. Hoffmann), Vol. 9, 145 - 261, J. Wiley, New York 1977).

Infolge von Dissipations- und Strahlungsverlusten werden diese Wellen auch entlang ihrer Ausbreitungsrichtung gedämpft (vgl. T. Inagaki, K. Kagani and F.T. Arakawa, Phys. Rev. B 24,3644 (1981) und B. Rothenhäusler, J. Rabe, P. Korpiun und W. Knoll, Surf. Sci. 137, 373 (1984). Das Interesse an den Oberflächenplasmonen hat in den letzten Jahren zugenommen, da sie in verschiedenen oberflächenspektroskopischen Untersuchungen an Adsorbaten und Dünnfilmschichten erfolgreich zur Feldverstärkung eingesetzt wurden (vgl. Elektromagnetic Surface Excitation, R.F. Wallis and G.I. Stegeman, eds. Springer, Berlin 1986).

Oberflächenplasmonen werden mit einer Kopplungsanordnung (vgl. H. Raether in Physics of Thin Films (eds. G. Hass, M.H. Francombe and R.W. Hoffmann), Vol 9, 145 - 261, J. Wiley, New York 1977), wie einer Gitter-, Otto-, Kretschmann-Anordnung, vorzugsweise Kretschmann-Anordnung durch parallel zur Einfallsebene (p-) polarisiertes paralleles Licht angeregt. In der Kretschmann-Anordnung wird die Basisfläche eines Prismas (z.B. aus BK 7-Glas) entweder direkt mit einer Metall- oder Halbleiterschicht beschichtet oder es wird ein entsprechendbeschichteter Glasobjektträger mit der unbeschichteten Seite mit Immersionsflüssigkeit an das Prisma geklebt. Bevorzugt als Metallschichten sind Silber oder Gold oder ein Schichtsystem aus Chrom und Gold.

Lichtleitermoden in dünnen transparenten Medien werden von P.K. Tien in Rev. Mod. Phys. 49, 361 (1977) behandelt.

Lichtleitermoden sind elektromagnetische Wellen, die sich in transparenten dünnen Medien ausbreiten können. Die Welle breitet sich parallel zu den Grenzflächen des Mediums aus und ist in Ausbreitungsrichtung gedämpft. Das elektromagnetische Feld fällt an den Grenzflächen des Mediums exponentiell ab.

Zur Anregung von Lichtleitermoden in dünnen dielektrischen Schichten werden im wesentlichen zwei Kopplungsanordnungen verwendet: Prismenkopplung (vgl. P.K. Tien, R. Ulrich, Appl. Phys. Lett. 14, 291 (1969) und Gitterkopplung (vgl. D.G. Dalgoutte, C.D.W. Wilkinson, Appl. Optics, 14, 2983 (1975)).

Bei der Prismenkopplung trifft parallel zur Einfallsebene (p-) oder senkrecht zur Einfallsebene (s-) polarisiertes paralleles Licht auf ein Prisma, das an der Basisfläche des Prismas total reflektiert wird. Das lichtleitende Medium, das sich auf einem festen Träger befindet, wird der Basisfläche des Prismas bis auf einige 100 nm genähert. Als Medium zwischen Prisma und lichtleitendem Medium kommen Gase oder Flüssigkeiten zum Einsatz. Alternativ zu diesem Aufbau kann der Spalt zwischen Prisma und lichtleitendem Medium durch eine Metall- oder Halbleiterschicht ersetzt werden. Das lichtleitende Medium wird dann auf die Metall- oder Halbleiterschicht aufgebracht. Als Metalle sind Silber, Gold, Aluminiuim, Kupfer- oder Chrom, sowie Schichtsysteme aus diesen Metallen bevorzugt.

Bei der Gitterkopplung wird die Oberfläche eines Festkörpers durch ein Präge- oder Ätzverfahren moduliert. Auf diese modulierte Oberfläche wird das lichtleitende Medium aufgebracht. Die Lichtleitermode wird im lichtleitenden Medium durch Bestrahlung mit p- oder s-polarisiertem Licht angeregt.

Als lichtleitende Medien können Aufdampfschichten aus dielektrischen Materialien (z.B. $SiO_2$) oder Metalloxiden (z.B. ZnO), aufgeschleuderte Polymerfilme (z.B. PMMA) oder Langmuir-Blodgett-Filme (z.B. aus Polyglutamat) mit Dicken von 200 nm bis 1 mm, bevorzugt 300 nm bis 10 $\mu$m, verwendet werden. Das lichtleitende Medium kann auch aus einem Schichtsystem, das mit den oben beschriebenen Methoden hergestellt wird, bestehen.

Die optische Filterung von p-polarisiertem Licht durch Oberflächenplasmonen gelingt nun dadurch, daß das zu filternde Licht unter einem bestimmten Einfallswinkel auf eine der Kopplungsanordnungen fällt. Aufgrund der wellenlängenabhängigen Dispersion von Oberflächenplasmonen wird bei einem bestimmten Einfallswinkel des Lichts nur das Oberflächenplasmon einer Wellenlänge angeregt. Die reflektierte Intensität des Lichts dieser Wellenlänge nimmt bei diesem Winkel ein Minimum an. Durch Veränderung des Einfallswinkels wird die Oberflächenplasmonenresonanzbedingung für eine andere Wellenlänge erfüllt, dadurch wird das Filter durchstimmbar. Das Filter ist im allgemeinen vom Infraroten bis zum Ultravioletten durchstimmbar. Typische Kenngrößen für dieses inverse Bandpaßfilter, z.B. für einen 50 nm dicken Silberfilm auf einem BK 7-Prisma sind: für die Filterung von Licht mit $\lambda$ = 633 nm: Halbwertsbreite des Filters: $\lambda_{1/2}$ = 17 nm, Güte des Filters (angegeben als reflektierte Intensität, bezogen auf die eingestrahlte Lichtintensität): 0,41 %. Die Beeinflussung der Kenngrößen ist durch die Wahl der Metallschicht, sowie durch auf die Metallschicht aufgebrachte Deckschichten (z.B. Aufdampfschichten, aufgeschleuderte Schichten, Langmuir-Blodgett-Schichten) möglich.

Die Charakteristik des Filters kann für das jeweils verwendete Schichtsystem mit den Fresnelschen Gleichungen (vgl. H. Wolter in "Handbuch der Physik", S. Flugge led.), Springer Verlag, Berlin, 1956) berechnet werden.

Die optische Filterung von p- oder s-polarisiertem Licht durch Lichtleitermoden ist dem Verfahren zur optischen Filterung mit Oberflächenplasmonen analog. Das zu filternde Licht trifft unter einem bestimmten Winkel auf eine der oben beschriebenen Kopplungsanordnungen. Es wird eine Lichtleitermode des Wellenlängenbereiches angeregt, für den die Kopplungsbedingung für Lichtleitermoden erfüllt ist. Die reflektierte Intensität des Lichtes dieses Wellenlängenbereiches ist minimal. Durch Veränderung des Einfallswinkels des Lichts kann das Filter durchgestimmt werden. Dies führt wiederum zu einem durchstimmbaren inversen Bandpaßfilter. Die Charakteristik des Filters wird durch die lichtleitende Schicht bzw. das lichtleitende Medium bestimmt, (z.B. sind für eine geringe Halbwertsbreite des Filters Materialien mit großer Dispersion zu wählen) und kann mit den Fresnelschen Gleichungen berechnet werden.

Ein Vorteil der Filterung durch Anregung von Lichtleitermoden im Vergleich zu Oberflächenplasmonen ist, daß mit Lichtleitermoden sowohl die Filterung von p- als auch von s-polarisiertem Licht möglich ist. Außerdem ist es möglich, das in das lichtleitende Medium eingekoppelte Licht auszuwerten. Dies ermöglicht den Aufbau eines optischen Bandpaßfilters.

Beispiel 1

Die Basisfläche eines Prismas (aus BK 7-Glas) wird mit 50 nm Silber beschichtet. Das Prisma wird mit weißem p-polarisiertem Licht bestrahlt. Liegt der Einfallswinkel des Lichtes zwischen 42° und 53°, erscheint das reflektierte Licht bunt. Die Farbe des reflektierten Lichts wechselt von grün (kleiner Einstrahlwinkel) nach rot (großer Einstrahlwinkel). Die Farben des reflektierten Lichts entstehen dadurch, daß in Abhängigkeit des Einstrahlwinkels verschiedene Wellenlängenbereiche aus dem reflektierten Licht ausgeblendet werden.

Beispiel 2

Die Basisfläche eines BK 7-Prismas wird mit 50 nm Silber bedampft. Auf die Silberschicht wird durch Aufdampfen durch eine Maske (Elektronenmikroskopienetz) eine strukturierte 15 nm dicke $SiO_2$-Schicht aufgebracht. Das so präparierte Prisma wird mit p-polarisiertem weißem Licht bestrahlt und mit dem Oberflächenplasmonen-Mikroskop (vgl. B. Rothenhäusler, W. Knoll in Nature 332, 615 (1988)) untersucht. Das Oberflächenplasmonen-Mikroskop ermöglicht die Lateralstruktur der SiO$_2$-Schicht aufzulösen.

Da die beschichtete und unbeschichtete Silberschicht zwei unterschiedliche Filter repräsentieren, sollte die SiO$_2$ Struktur mit Farbkontrast abzubilden ist. Dies ist tatsächlich möglich. Bei einem Einstrahlwinkel von $\theta = 45°$ erscheinen die unbeschichteten Bereiche rot, die beschichteten dagegen gelb. Bei $\theta = 50°$ sind die unbeschichteten Bereiche weiß/blau, die beschichteten Bereiche sind violett.

Beispiel 3

Ein Prisma aus SF 57-Glas wird mit 50 nm Silber bedampft. Als lichtleitendes Medium wird auf das Silber eine 310 nm dicke SiO$_2$-Schicht aufgedampft. Das Prisma wird zuerst mit p-polarisiertem Licht der Wellenlänge $\lambda = 633$ nm und $\lambda = 456$ nm bestrahlt. Bei einem Einstrahlwinkel des Lichts von $\theta = 31,4°$ ist das reflektierte Licht blau/violett, da für Licht der Wellenlänge $\lambda = 633$ nm die Kopplungsbedingung für Lichtleitung erfüllt ist. Das in das lichtleitende Medium eingekoppelte Licht ist rot. Bei $\theta = 35°$ ist das reflektierte Licht rot, das in das lichtleitende Medium eingekoppelte Licht dagegen blau. Die Kopplungsbedingungen bei $\theta = 35°$ sind also gerade umgekehrt. Das gleiche Experiment wurde mit s-polarisiertem Licht wiederholt. Bei $\theta = 53°$ ist das reflektierte Licht blau, bei $\theta = 54°$ ist es rot.

**Ansprüche**

1. Verfahren zur optischen Filterung von polarisiertem Licht, dadurch gekennzeichnet, daß das zu filternde polarisierte Licht auf ein Schichtsystem trifft, in dem Oberflächenplasmonen oder Lichtleitermoden angeregt werden.

2. Verfahren nach Anspruch 1, dadurch gekennzeichnet, daß Oberflächenplasmonen an einer Metall- oder Halbleiter/Dielektrikum-Grenzfläche angeregt werden.

3. Verfahren nach Anspruch 1, dadurch gekennzeichnet, daß Lichtleitermoden in einem transparenten Medium angeregt werden.

4. Verfahren nach Anspruch 2 oder 3, dadurch gekennzeichnet, daß zur Anregung von Oberflächenplasmonen oder Lichtleitermoden eine Kopplungsanordnung verwendet wird.

5. Verfahren nach Anspruch 4, dadurch gekennzeichnet, daß als Kopplungsanordnung ein Prisma verwendet wird.

6. Verfahren nach Anspruch 5, dadurch gekennzeichnet, daß die Basisfläche des Prismas mit einer Metall- oder Halbleiterschicht beschichtet ist.

7. Verfahren nach Anspruch 5, dadurch gekennzeichnet, daß die Basisfläche des Prismas mit einer Metall- oder Halbleiterschicht und einer transparenten Deckschicht beschichtet ist.

8. Verfahren nach Anspruch 5, dadurch gekennzeichnet, daß eine Metall-oder Halbleiterschicht und/oder eine transparente Schicht mit einem Abstand von 100 bis 400 nm zur Basisfläche des Prismas angebracht ist.

9. Verfahren nach Anspruch 4, dadurch gekennzeichnet, daß als Kopplungsanordnung eine Gitterstruktur auf einer Festkörperoberfläche verwendet wird, auf die eine Metall- oder Halbleiterschicht und/oder eine transparente Schicht aufgebracht ist.